# EUROPÄISCHE PATENTSCHRIFT

(11) **EP 2 980 460 B1**
(45) Veröffentlichungstag und Bekanntmachung des Hinweises auf die Patenterteilung: **01.04.2020**
(21) Anmeldenummer: 14179331.5
(22) Anmeldetag: 31.07.2014
(51) Int. Cl.: F16J 15/3292, B22F 3/105, F01D 11/00

(54) **Bauweise und generative Herstellung einer integralen Leafseal**
Method of construction and generative manufacture of an integral leaf seal
Construction et fabrication générative d'un joint intégral

(43) Veröffentlichungstag der Anmeldung: 03.02.2016
(73) Patentinhaber: MTU Aero Engines AG, 80995 München (DE)
(72) Erfinder: Weber, Julian, 80797 München (DE); Cernay, Christoph, 83052 Bruckmühl (DE); Heß, Thomas, 81541 München (DE)

(56) Entgegenhaltungen:
- EP-A1- 1 271 021
- EP-A1- 2 325 442
- EP-A2- 1 365 181
- DE-A1-102010 054 113
- US-A- 5 031 922
- US-A- 5 755 445
- US-A1- 2003 174 918

## Beschreibung

Die Erfindung betrifft eine Lamellendichtung zum Abdichten einer um eine Achse rotierenden Welle, insbesondere in einer Gasturbine. Die Erfindung betrifft weiterhin eine Gasturbine mit einer derartigen Lamellendichtung sowie ein Verfahren zum Herstellen einer solchen Lamellendichtung.

Beispielsweise wird in DE 10 2010 054113 A1 eine Lamellendichtung vorgeschlagen, deren Lamellen generativ hergestellt sind. Ganz allgemein wird ferner offenbart, dass durch die generative Herstellung verschiedene Dichtungsabschnitte im Wesentlichen frei gestaltet werden können. Am Beispiel einer Bürstendichtung wird ein Dichtelement gezeigt, dessen im Wesentlicher quadratischer Querschnitt in einem mittleren Bereich an zwei um eine Hochachse versetzte Stellen eine Ausnehmung aufweist.

Zum Abdichten von Spalten können unterschiedliche Dichtungen verwendet werden. Beispielsweise werden im Triebwerksbau häufig Bürstendichtungen verwendet, um Spalte zwischen einem Rotor und einem Stator abzudichten. Bürstendichtungen gehören aufgrund ihrer mechanischen Integrität zu den berührenden Dichtungen, die während des Betriebs sowohl selbst als auch den Reibpartner bei Berührung verschleißen. Zusätzlich sind Bürstendichtungen nur bis zu einem Differenzdruck von etwa 12 bar einsetzbar.

Eine Lösung für dieses Problem bieten Lamellendichtungen, die aufgrund ihrer axialen Steifigkeit auch in Umgebungen mit sehr hohen Druckdifferenzen eingesetzt werden können und sich darüber hinaus langsamer abnutzen als Bürstendichtungen. Eine derartige Lamellendichtung, die auch als "Leafseal" bezeichnet wird, ist beispielsweise bereits aus der DE 10 2004 020 378 A1 bekannt und umfasst eine Mehrzahl von Lamellen, die durch Elektronenstrahl-Schweißen miteinander verbunden werden. Alternativ ist es bekannt, die einzelnen Lamellen einer Lamellendichtung separat in eine korrespondierende Aufnahme eines Gehäuses einzufädeln. Eine ähnliche Dichtung ist auch aus US 2003/0174918 bekannt.

Beide Bauarten sind allerdings sehr aufwendig und extrem teuer, da Lamellendichtungen beispielsweise im Triebwerksbereich bis zu 4000 Lamellen oder mehr umfassen können. Aufgrund der vergleichsweise filigranen Ausgestaltung der einzelnen Lamellen können die bekannten Lamellendichtungen auch nicht in einer praktikablen Baugröße für Triebwerksanwendungen vorgefertigt und nicht oder nur mit hohem Aufwand an unterschiedliche Einbausituationen angepasst werden. Zusätzlich muss ein entsprechend hoher Aufwand betrieben werden, um eine ausreichende Reproduzierbarkeit solcher individuell gefertigten Lamellendichtungen sicherzustellen.

Aufgabe der vorliegenden Erfindung ist es, eine Lamellendichtung der eingangs genannten Art zu schaffen, welche einfacher herstellbar und einfacher an unterschiedliche Einbausituationen anpassbar ist. Eine weitere Aufgabe der Erfindung ist es, ein Verfahren zum Herstellen einer solchen Lamellendichtung anzugeben.

Die Aufgaben werden erfindungsgemäß durch eine Lamellendichtung mit den Merkmalen des Patentanspruchs 1 sowie durch ein Verfahren mit den Merkmalen des Patentanspruchs 14 zum Herstellen einer derartigen Lamellendichtung gelöst. Vorteilhafte Ausgestaltungen mit zweckmäßigen Weiterbildungen der Erfindung sind in den jeweiligen Unteransprüchen angegeben, wobei vorteilhafte Ausgestaltungen der Lamellendichtung als vorteilhafte Ausgestaltungen des Verfahrens und umgekehrt anzusehen sind.

Ein erster Aspekt der Erfindung betrifft eine Lamellendichtung zum Abdichten einer um eine Achse rotierenden Welle, insbesondere in einer Gasturbine, umfassend eine Mehrzahl von voneinander beabstandet angeordneten Lamellen, wobei erfindungsgemäß vorgesehen ist, dass die Lamellen mittels eines generativen Fertigungsverfahrens integral mit einem die Lamellen tragenden Basiselement hergestellt sind. Mit anderen Worten ist es im Unterschied zum Stand der Technik vorgesehen, dass die Lamellendichtung generativ hergestellt wird, wobei die einzelnen Lamellen über ein Basiselement miteinander verbunden sind. Hierdurch ist die erfindungsgemäße Lamellendichtung schneller und einfacher herstellbar. Darüber hinaus ermöglicht die generative Fertigung eine hohe konstruktive Freiheit und Flexibilität, so dass die erfindungsgemäße Lamellendichtung auch einfacher an unterschiedliche Einbausituationen anpassbar ist. Die integrale Bauweise ermöglicht beispielsweise eine einfache Modifikation der Abstände zwischen den einzelnen Lamellen bzw. Dichtelementen, so dass die Lamellendichtung schnell und einfach an jeden beliebigen Wellendurchmesser bzw. an jede Spaltgeometrie angepasst werden kann. Außerdem kann die Steifigkeit jeder einzelnen Lamelle stufenlos an die vorliegenden Anforderungen angepasst werden. Insbesondere ermöglicht die generative Herstellung eine sehr große Bandbreite an Blattstärken, so dass die einzelnen Lamellen unabhängig voneinander mittlere Dicken zwischen beispielsweise 0,1 mm und 4 mm aufweisen können. Ebenso ist es möglich, die radiale Bauhöhe jeder einzelnen Lamelle sowie die individuellen Abstände zwischen benachbarten Lamellen optimal an die jeweilige Einbausituation anzupassen. Unabhängig davon kann auch die Form bzw. Geometrie der einzelnen Lamellen (Leafs) optimal an die jeweiligen Anforderungen angepasst werden. Neben der Einstellung der jeweiligen Geometrie ist es zudem möglich, den im Rahmen des generativen Herstellungsverfahren verwendeten Werkstoff ein- oder mehrmals zu variieren, um bestimmte Eigenschaften der Lamellendichtung gezielt einzustellen. Schließlich kann auch das Basiselement unabhängig von den Lamellen ausgebildet sein. Beispielsweise kann das Basiselement als Deckband ausgebildet sein, welches zusammen mit den Lamellen (Leafs) als integraler Verband gefertigt und als Lamellendichtung in beliebigen Gehäusekonfigurationen verbaubar ist. Insbesondere können durch die generative Fertigung auch sehr große oder sehr kleine Baugrößen hergestellt werden. Durch die integrale Bauart sind weiterhin die Toleranzen deutlich geringer als bei den bislang bekannten Lamellendichtungen. Ebenso reduziert sich die Montagezeit der Lamellendichtung erheblich, da durch die integrale Bauweise keine Einzellamellen eingefädelt oder verschweißt werden müssen. Stattdessen kann die gesamte Lamellendichtung integral hergestellt und im einfachsten Fall ohne weitere Bearbeitungsschritte direkt verbaut werden. Dies erlaubt eine Kostensenkung um den Faktor 10 oder mehr. Die generative Fertigungsweise erhöht zusätzlich die Reproduzierbarkeit der Lamellendichtung.

Erfindungsgemäß ist vorgesehen, dass wenigstens eine Lamelle eine ungleichmäßige Querschnittsgeometrie aufweist. Mit anderen Worten ist es vorgesehen, dass eine, mehrere oder alle Lamellen eine nicht-gleichförmige Querschnittsgeometrie aufweisen. Beispielsweise können an jeder Lamelle eine oder mehrere lokale Verdickungen und/oder Verdünnungen vorgesehen sein. Hierdurch kann beispielsweise das elastische Beigeverhalten jeder Lamelle optimal eingestellt werden.

Weitere Vorteile ergeben sich erfindungsgemäß, indem wenigstens eine Lamelle im Bereich des Basiselements eine verringerte Querschnittsdicke aufweist. Eine solche Ausnehmung erleichtert ein relatives Kippen der betreffenden Lamelle gegenüber dem Basiselement, so dass eine verbesserte Anlage an einer zugeordneten Welle und damit eine verbesserte Dichtwirkung erzielt werden. Grundsätzlich können mehrere oder alle Lamellen derart ausgebildet sein.

Alternativ oder zusätzlich kann vorgesehen sein, dass wenigstens eine Lamelle ein Distanzelement zum Einstellen eines Mindestabstands zu einer angrenzenden Lamelle umfasst. Dies ermöglicht die Einstellung eines Mindestspalts zwischen zwei angrenzenden Lamellen und damit eine definierte Mindestdurchlässigkeit der Lamellendichtung für ein Betriebsfluid. Das Distanzelement kann in einfachster Ausgestaltung beispielsweise als verdickter Bereich der Lamelle ausgebildet und vorzugsweise am dem Basiselement gegenüberliegenden Endbereich der Lamelle ausgebildet sein.

Weitere Möglichkeiten zur individuellen Einstellung der Dichtwirkung und der Geometrie der Lamellendichtung sind dadurch gegeben, dass wenigstens eine Lamelle in einem vorbestimmten Legewinkel und/oder in einem vorbestimmten Anstellwinkel bezüglich einer Längsachse des Basiselements angeordnet ist. Mit anderen Worten können der Neigungswinkel der Lamelle und/oder der Winkel zwischen der Längsachse des Basiselements und der Sehne der betreffenden Lamelle grundsätzlich frei gewählt sein. Der Neigungswinkel und/oder der Winkel zwischen der Längsachse des Basiselements und der Sehne der betreffenden Lamelle können damit unabhängig voneinander beispielsweise Werte von 5°, 10°, 15°, 20°, 25°, 30°, 35°, 40°, 45°, 50°, 55°, 60°, 65°, 70°, 75°, 80°, 85° oder 90° sowie entsprechende Zwischenwerte annehmen.

In einer weiteren vorteilhaften Ausgestaltung der Erfindung ist vorgesehen, dass das Basiselement wenigstens ein Befestigungsmittel zum Festlegen der Lamellendichtung an einem Bauteil, insbesondere an einem Gehäuseteil, umfasst. Dies erlaubt eine besonders einfache Anpassbarkeit der Lamellendichtung an unterschiedliche Gehäusetypen, da auch die Geometrie und Anordnung des oder der Befestigungsmittel grundsätzlich frei gewählt werden kann.

In einer weiteren vorteilhaften Ausgestaltung der Erfindung ist vorgesehen, dass das wenigstens eine Befestigungsmittel an einer den Lamellen abgewandten Seite des Basiselements angeordnet ist. Dies ermöglicht eine besonders einfache Befestigung der Lamellendichtung in einer zugeordneten Halterung.

In einer vorteilhaften Ausgestaltung der Erfindung ist vorgesehen, dass das wenigstens eine Befestigungsmittel mittels des generativen Fertigungsverfahrens integral mit dem Basiselement hergestellt ist. Obwohl es grundsätzlich natürlich auch denkbar ist, das wenigstens eine Befestigungsmittel nachträglich am Basiselement anzuordnen, stellt die integrale Herstellung des wenigstens einen Befestigungsmittels mit dem Basiselement eine konstruktiv besonders einfache und schnelle Möglichkeit dar, um das Basiselement mit dem wenigstens einen Befestigungsmittel auszustatten.

Weitere Vorteile ergeben sich, indem wenigstens eine Lamelle an ihrem stromaufwärtigen und/oder stromabwärtigen Endbereich ein Winglet aufweist. Mit anderen Worten ist es erfindungsgemäß vorgesehen, dass wenigstens eine, mehrere oder alle Lamellen einen bezüglich einer späteren Einbausituation stromaufwärtig und/oder stromabwärtig angeordneten Endbereich aufweisen, der in einem Anstellwinkel zum angrenzenden Lamellenbereich angeordnet ist. Solche Winglets erhöhen vorteilhaft die Dichtwirkung der Lamellendichtung, da sie in axialer Richtung geradlinige Passagen für die Gasströmung teilweise blockieren, aber nicht vollständig verschließen. Der Gasstrom wird stattdessen durch das Winglet bzw. durch die Winglets umgeleitet, sodass eine Art Labyrinthdichtung entsteht.

Weitere Vorteile ergeben sich, indem das Basiselement und/oder wenigstens eine Lamelle wenigstens eine Aussparung umfasst. Dies ermöglicht neben einer Gewichtsoptimierung der Lamellendichtung auch die Sicherstellung einer gleichmäßigen Druckverteilung sowie die Anpassung der Grundsteifigkeit der Lamelle(n) bzw. des Basiselements.

In einer weiteren vorteilhaften Ausgestaltung der Erfindung ist vorgesehen, dass das Basiselement elastisch verformbar und/oder im Längsschnitt ringsegmentförmig ausgebildet ist. Dies ermöglicht eine besonders einfache und schnelle Montage der Lamellendichtung in einem zylindrischen Spalt, beispielsweise in einer Gasturbine.

Ein weiterer Aspekt der Erfindung betrifft eine Gasturbine, insbesondere Flugzeugtriebwerk, mit einem Gehäuse, in welchem wenigstens eine Lamellendichtung nach einem der vorhergehenden Ausführungsbeispiele um einen Rotor angeordnet ist, um einen Fluidstrom von einer Hochdruckseite zu einer Niederdruckseite des Rotors zu reduzieren. Die sich hieraus ergebenden Merkmale und deren Vorteile sind den vorhergehenden Beschreibungen des ersten Erfindungsaspekts zu entnehmen, wobei vorteilhafte Ausgestaltungen der Lamellendichtung als vorteilhafte Ausgestaltungen der Gasturbine und umgekehrt anzusehen sind.

Indem wenigstens zwei Lamellendichtungen gemäß dem ersten Erfindungsaspekt vorgesehen und in axialer Richtung bezüglich einer Drehachse des Rotors, vorzugsweise versetzt, hintereinander angeordnet sind, kann die Dichtwirkung auf einfache und kostengünstige Weise erheblich gesteigert werden. Durch den Grad der relativen Versetzung zueinander kann die Dichtwirkung zudem besonders exakt eingestellt werden. Dabei kann grundsätzlich vorgesehen sein, dass die wenigstens zwei Lamellendichtungen mittels des generativen Fertigungsverfahrens zunächst einstückig hergestellt werden. Bedarfsweise kann anschließend eine Aufteilung der einstückigen Lamellendichtung in zwei oder mehr einzelne Lamellendichtungen vorgenommen werden.

Ein dritter Aspekt der Erfindung betrifft ein Verfahren zum Herstellen einer Lamellendichtung zum Abdichten einer um eine Achse rotierenden Welle, insbesondere in einer Gasturbine, wobei die Lamellendichtung eine Mehrzahl von voneinander beabstandet angeordneten Lamellen umfasst. Dabei ist erfindungsgemäß vorgesehen, dass die Lamellen mittels eines generativen Fertigungsverfahrens integral zusammen mit einem die Lamellen tragenden Basiselement hergestellt werden. Die sich hieraus ergebenden Merkmale und deren Vorteile sind den vorhergehenden Beschreibungen des ersten und des zweiten Erfindungsaspekts zu entnehmen, wobei vorteilhafte Ausgestaltungen der Lamellendichtung bzw. der Gasturbine als vorteilhafte Ausgestaltungen des erfindungsgemäßen Verfahrens und umgekehrt anzusehen sind. Das erfindungsgemäße Verfahren ist dabei grundsätzlich nicht auf ein bestimmtes generatives Fertigungsverfahren beschränkt. Beispielsweise können an sich bekannte generative Verfahren wie selektives Laserschmelzen (SLM, Selective Laser Melting), direktes Metalllasersintern (DMLS, Direct Metal Laser Sintering) und/oder Elektronenstrahlenverfahren verwendet werden.

In einer vorteilhaften Ausgestaltung der Erfindung ist vorgesehen, dass während des generativen Fertigungsverfahrens eine Stützstruktur an der Lamellendichtung ausgebildet und vorzugsweise anschließend entfernt wird. Mit Hilfe einer Stützstruktur wird insbesondere eine Beschädigung der Lamellen während des generativen Herstellungsverfahrens vorteilhaft vermieden. Die Stützstruktur kann beispielsweise an einer dem Basiselement gegenüberliegenden Endbereich der Lamellen mit ausgebildet und nach Fertigstellung der Lamellendichtung vorzugsweise wieder entfernt werden.

Weitere Merkmale der Erfindung ergeben sich aus den Ansprüchen, dem Ausführungsbeispielen sowie anhand der Zeichnungen. Die vorstehend in der Beschreibung genannten Merkmale und Merkmalskombinationen sowie die nachfolgend in dem Ausführungsbeispiel genannten Merkmale und Merkmalskombinationen sind nicht nur in der jeweils angegebenen Kombination, sondern auch in anderen Kombinationen verwendbar, ohne den Rahmen der Erfindung zu verlassen. Dabei zeigt:
- Fig. 1: eine schematische Seitenansicht einer erfindungsgemäßen Lamellendichtung, welche zusammen mit einer Stützstruktur hergestellt wurde;
- Fig. 2: eine schematische Perspektivansicht eines weiteren Ausführungsbeispiels der erfindungsgemäßen Lamellendichtung;
- Fig. 3: eine schematische Seitenansicht eines weiteren Ausführungsbeispiels der erfindungsgemäßen Lamellendichtung;
- Fig. 4: eine perspektivische Aufsicht der in Fig. 3 gezeigten Lamellendichtung;
- Fig. 5: eine Vergrößerung des in Fig. 4 gezeigten Details V; und
- Fig. 6: eine schematische Seitenansicht eines weiteren Ausführungsbeispiels der erfindungsgemäßen Lamellendichtung, bei welcher die in Fig. 1 gezeigte Stützstruktur entfernt wurde.

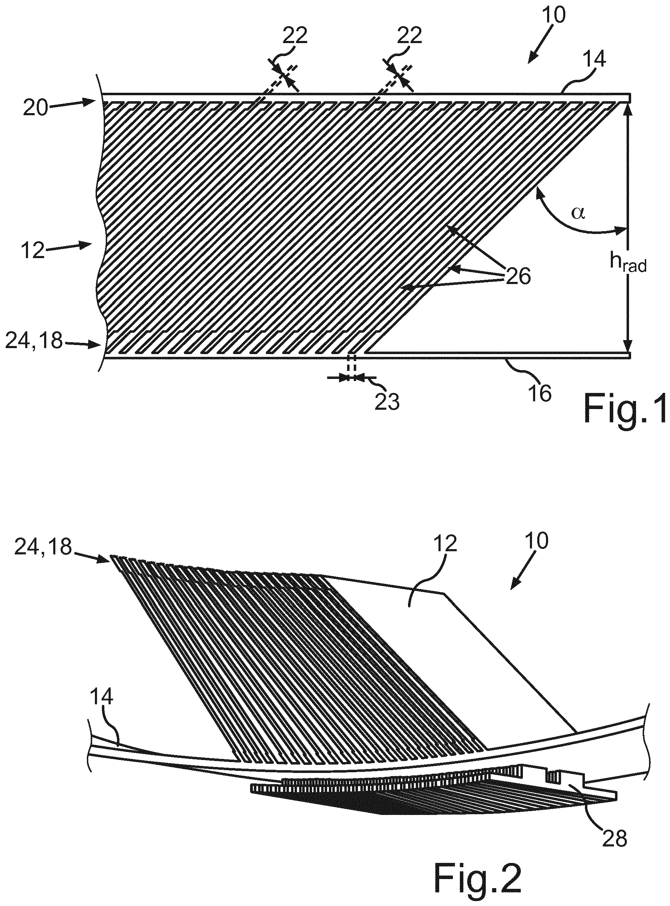

Fig. 1 zeigt ein Ausführungsbeispiel einer erfindungsgemäßen Lamellendichtung 10 zum Abdichten eines Rotors eines Flugzeugtriebwerks. Die Lamellendichtung 10 umfasst eine Mehrzahl von voneinander beabstandet angeordneten Lamellen 12, welche mittels eines generativen Fertigungsverfahrens integral mit einem die Lamellen 12 tragenden Basiselement 14 hergestellt sind. Das Basiselement 14 ist vorliegend als äußeres Deckband ausgebildet und kann spezifisch je nach Bauraum der Anwendung ausgeführt sein. Man erkennt weiterhin eine blattförmige Stützstruktur 16, die an einem dem Basiselement 14 gegenüberliegenden Endbereich 18 der Lamellen 12 während des generativen Fertigungsverfahrens mit hergestellt wurde, um die Lamellen 12 vor Beschädigung zu schützen. Wie man beispielsweise in Fig. 2 bis Fig. 5 erkennt, wird die Stützstruktur 16 vor dem Einbau der Lamellendichtung 10 entfernt, so dass die Fixierung der Endbereiche 18 der Lamellen 12 aufgehoben wird. Wie man in Fig. 1 erkennt, können unterschiedliche Parameter der Lamellendichtung 10 frei eingestellt werden, um die Geometrie, Steifigkeit und Dichtwirkung der Lamellendichtung 10 einzustellen. Beispielsweise kann die mittlere Blatt- bzw. Querschnittsdicke 21 der einzelnen Lamellen 12 unabhängig voneinander gewählt sein und in einer Bandbreite von etwa 0,1 mm bis etwa 4 mm variiert werden. Man erkennt weiterhin, dass die Lamellen 12 in ihrem dem Basiselement 14 zugewandten Endbereich 20 Aussparungen bzw. verringerte Querschnittsdicken 22 aufweisen, wodurch ein relatives Verkippen der Lamellen 12 gegenüber dem Basiselement 14 erleichtert ist. Ebenso können der Abstand 23 zwischen den einzelnen Lamellen 12, der Legewinkel α sowie die radiale Höhe h_{rad} frei eingestellt werden. Im gezeigten Ausführungsbeispiel weisen die Lamellen 12 einen Anstellwinkel von 90° (nicht gezeigt) bezüglich einer Längsachse des Basiselements 14 auf, wodurch sie in eingebautem Zustand einen Anstellwinkel von 0° bezüglich des Gasstroms im Flugzeugtriebwerk besitzen. Auch dieser Anstellwinkel kann grundsätzlich frei eingestellt sein und beispielsweise 5°, 10°, 15° oder mehr betragen, um die Dichtwirkung der Lamellendichtung 10 anzupassen. Weiterhin umfassen die Lamellen 12 an ihren Endbereichen 18 Distanzelemente 24 zum Einstellen eines Mindestabstands zwischen aneinander angrenzenden Lamellen 12 auf. Die Distanzelemente 24 sind im gezeigten Ausführungsbeispiel durch Querschnittsverdickungen gebildet und bewirken die Ausbildung definierter Spalte 26 zwischen den einzelnen Lamellen 12.

Fig. 2 zeigt eine schematische Perspektivansicht eines weiteren Ausführungsbeispiels der erfindungsgemäßen Lamellendichtung 10. Im Unterschied zum in Fig. 1 gezeigten Ausführungsbeispiel wurde die Stützstruktur 16 entfernt, so dass die Endbereiche 18 der Lamellen 12 relativ zueinander beweglich sind. Man erkennt weiterhin, dass das Basiselement 14 elastisch und ringsegmentförmig ausgebildet ist, wodurch die Lamellendichtung 10 besonders schnell und einfach in einem ringförmigen Gehäuse (nicht gezeigt) einer Gasturbine anordenbar ist. Zum Festlegen der Lamellendichtung 10 am Gehäuse der Gasturbine umfasst das Basiselement 14 auf seiner den Lamellen 12 abgewandten Seite mehrere Befestigungsmittel 28, die zusammen mit der Lamellendichtung 10 bzw. dem Basiselement 14 integral ausgebildet wurden und mittels des generativen Fertigungsverfahrens ebenfalls frei bezüglich Anzahl, Anordnung und Geometrie variiert werden können. Im gezeigten Ausführungsbeispiel werden die Befestigungsmittel 28 in eine korrespondierende Aufnahme des zugeordneten Gehäuses geschoben und lagegesichert.

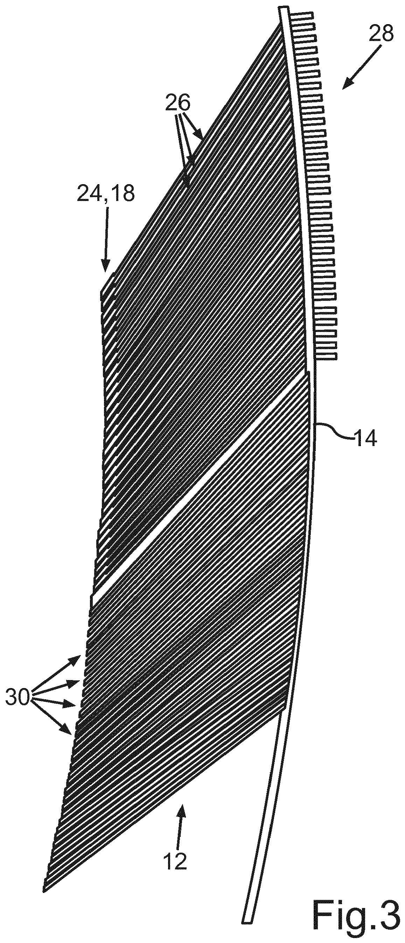

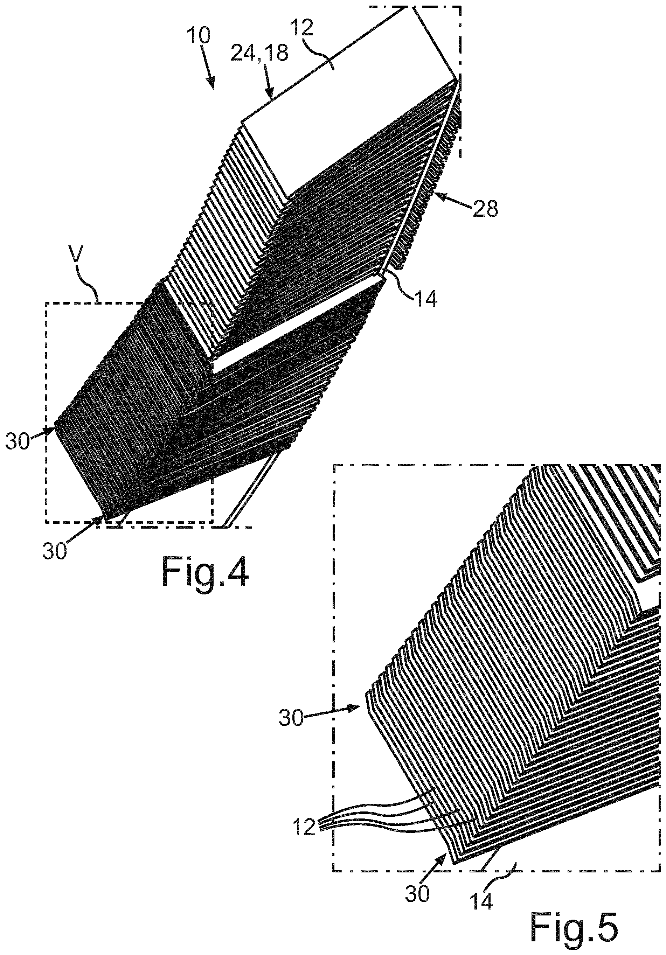

Fig. 3 zeigt eine schematische Seitenansicht eines weiteren Ausführungsbeispiels der erfindungsgemäßen Lamellendichtung 10. Fig. 3 wird im Folgenden in Zusammenschau mit Fig. 4 und Fig. 5 erläutert werden, wobei Fig. 4 eine perspektivische Aufsicht der in Fig. 3 gezeigten Lamellendichtung 10 und Fig. 5 eine Vergrößerung des in Fig. 4 gezeigten Details V zeigen. Man erkennt, dass ein Teil der Lamellen 12 stromaufwärtige und stromabwärtige Winglets 30, das heißt in einem jeweiligen Anstellwinkel nach vorne bzw. nach hinten angestellte seitliche Endbereiche aufweisen. Die Winglets 30 können dabei grundsätzliche beliebige Geometrien und Flächen aufweisen. Ebenso kann vorgesehen sein, dass die stromaufwärtigen und/oder stromabwärtigen Winglets 30 unterschiedlich große Anstellwinkel besitzen. Im gezeigten Ausführungsbeispiel weisen die Lamellen 12 mit Winglets 30 zudem eine größere Breite auf als diejenigen Lamellen 12, die ohne Winglets 30 gefertigt wurden. Alternativ können aber natürlich alle Lamellen 12 die gleiche Breite besitzen oder Lamellen 12 ohne Winglets 30 eine größere Breite als Lamellen 12 mit Winglets 30 aufweisen. Die Winglets 30 erhöhen die Dichtwirkung der Lamellendichtung 10, da sie die in axialer Richtung geradlinig durchgängige Passage für die Gasströmung teilweise blockieren und die Gasströmung umlenken. Dadurch stellen sie eine Art Labyrinthdichtung dar, wobei zu betonen ist, dass zwischen den einzelnen Lamellen 12 - mit oder ohne Winglet(s) 30 - immer ein gewisser Restspalt verbleibt.

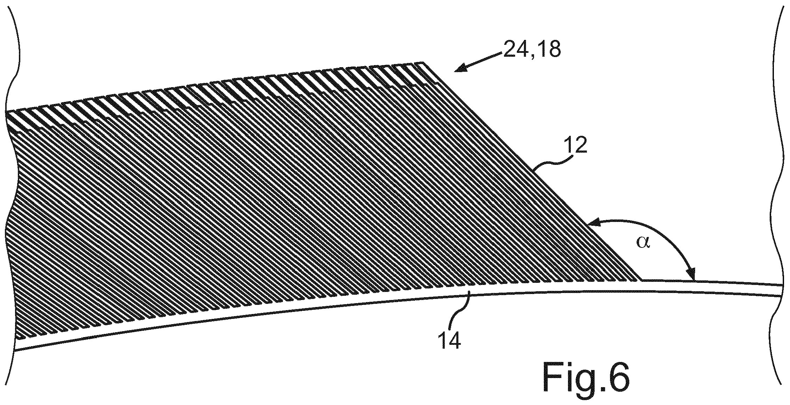

Fig. 6 zeigt eine schematische Seitenansicht eines weiteren Ausführungsbeispiels der erfindungsgemäßen Lamellendichtung 10, bei welcher die in Fig. 1 gezeigte Stützstruktur 16 entfernt wurde. Weiterhin erkennt man, dass der Legewinkel α der Lamellen 12 im Vergleich zu Fig. 1 unterschiedlich gewählt ist, um eine bessere Anpassung an eine abweichende Einbausituation der Lamellendichtung 10 zu gewährleisten.

### Bezugszeichenliste:

- 10: Lamellendichtung
- 12: Lamelle
- 14: Basiselement
- 16: Stützstruktur
- 18: Endbereich
- 20: Endbereich
- 21: Querschnittsdicke
- 22: Querschnittsdicke
- 23: Abstand
- 24: Distanzelement
- 26: Spalt
- 28: Befestigungsmittel
- 30: Winglet
- α: Legewinkel

### Bezugszeichenliste:

- 10: Lamellendichtung
- 12: Lamelle
- 14: Basiselement
- 16: Stützstruktur
- 18: Endbereich
- 20: Endbereich
- 21: Querschnittsdicke
- 22: Querschnittsdicke
- 23: Abstand
- 24: Distanzelement
- 26: Spalt
- 28: Befestigungsmittel
- 30: Winglet
- α: Legewinkel

## Patentansprüche

1. Lamellendichtung (10) zum Abdichten einer um eine Achse rotierenden Welle, insbesondere in einer Gasturbine, umfassend eine Mehrzahl von voneinander beabstandet angeordneten Lamellen (12),
wobei die Lamellen (12) mittels eines generativen Fertigungsverfahrens integral mit einem die Lamellen (12) tragenden Basiselement (14) hergestellt sind,
**dadurch gekennzeichnet,**
**dass** wenigstens eine Lamelle (12) eine ungleichmäßige Querschnittsgeometrie aufweist und die wenigstens eine Lamelle (12) im Bereich des Basiselements (14) eine verringerte Querschnittsdicke aufweist.

2. Lamellendichtung (10) nach Anspruch 1,
**dadurch gekennzeichnet, dass**
wenigstens eine Lamelle (12) ein Distanzelement (24) zum Einstellen eines Mindestabstands zu einer angrenzenden Lamelle (12) umfasst.

3. Lamellendichtung (10) nach Anspruch 1 oder 2,
**dadurch gekennzeichnet, dass**
wenigstens eine Lamelle (12) in einem vorbestimmten Legewinkel (a) und/oder in einem vorbestimmten Anstellwinkel bezüglich einer Längsachse des Basiselements (14) angeordnet ist.

4. Lamellendichtung (10) nach einem der Ansprüche 1 bis 3,
**dadurch gekennzeichnet, dass**
das Basiselement (14) wenigstens ein Befestigungsmittel (28) zum Festlegen der Lamellendichtung (10) an einem Bauteil, insbesondere an einem Gehäuseteil, umfasst.

5. Lamellendichtung (10) nach Anspruch 4,
**dadurch gekennzeichnet, dass**
das wenigstens eine Befestigungsmittel (28) an einer den Lamellen (12) abgewandten Seite des Basiselements (14) angeordnet ist.

6. Lamellendichtung (10) nach Anspruch 4 oder 5,
**dadurch gekennzeichnet, dass**
das wenigstens eine Befestigungsmittel (28) mittels des generativen Fertigungsverfahrens integral mit dem Basiselement (14) hergestellt ist.

7. Lamellendichtung (10) nach einem der Ansprüche 1 bis 6,
**dadurch gekennzeichnet, dass**
wenigstens eine Lamelle (12) an ihrem stromaufwärtigen und/oder stromabwärtigen Endbereich ein Winglet (30) aufweist.

8. Lamellendichtung (10) nach einem der Ansprüche 1 bis 7,
**dadurch gekennzeichnet, dass**
das Basiselement (14) und/oder wenigstens eine Lamelle (12) wenigstens eine Aussparung umfasst.

9. Lamellendichtung (10) nach einem der Ansprüche 1 bis 8,
**dadurch gekennzeichnet, dass**
das Basiselement (14) elastisch verformbar und/oder im Längsschnitt ringsegmentförmig ausgebildet ist.

10. Gasturbine, insbesondere Flugzeugtriebwerk, mit einem Gehäuse, in welchem wenigstens eine Lamellendichtung (10) nach einem der Ansprüche 1 bis 9 um einen Rotor angeordnet ist, um einen Fluidstrom von einer Hochdruckseite zu einer Niederdruckseite des Rotors zu reduzieren.

11. Gasturbine nach Anspruch 10,
**dadurch gekennzeichnet, dass**
wenigstens zwei Lamellendichtungen (10) vorgesehen und in axialer Richtung bezüglich einer Drehachse des Rotors vorzugsweise versetzt hintereinander angeordnet sind.

12. Verfahren zum Herstellen einer Lamellendichtung (10) zum Abdichten einer um eine Achse rotierenden Welle, insbesondere in einer Gasturbine, wobei die Lamellendichtung (10) eine Mehrzahl von voneinander beabstandet angeordneten Lamellen (12) umfasst,
**dadurch gekennzeichnet, dass**
die Lamellen (12) mittels eines generativen Fertigungsverfahrens integral zusammen mit einem die Lamellen (12) tragenden Basiselement (14) hergestellt werden,
**dadurch gekennzeichnet,**
**dass** während des generativen Fertigungsverfahrens eine Stützstruktur (16) an der Lamellendichtung (10) ausgebildet und vorzugsweise anschließend entfernt wird.

13. Verfahren nach Anspruch 12,
**dadurch gekennzeichnet, dass** die Stützstruktur an einer dem Basiselement gegenüberliegenden Endbereich der Lamellen mit ausgebildet wird.

## Claims

1. Leaf seal (10) for sealing a shaft that rotates about an axis, in particular in a gas turbine, comprising a plurality of leaves (12) arranged at a spacing from one another, the leaves (12) being produced by means of an additive manufacturing method so as to be integral with a base element (14) that supports the leaves (12), **characterized in that** at least one leaf (12) has a non-uniform cross-sectional geometry and the at least one leaf (12) has a reduced cross-sectional thickness in the region of the base element (14).

2. Leaf seal (10) according to claim 1, **characterized in that** at least one leaf (12) comprises a spacer element (24) for setting a minimum distance from an adjacent leaf (12).

3. Leaf seal (10) according to either claim 1 or claim 2, **characterized in that** at least one leaf (12) is arranged at a predetermined orientation angle (α) and/or at a predetermined angle of incidence with respect to a longitudinal axis of the base element (14).

4. Leaf seal (10) according to any of claims 1 to 3, **characterized in that** the base element (14) comprises at least one fastening means (28) for securing the leaf seal (10) on a component, in particular on a housing part.

5. Leaf seal (10) according to claim 4, **characterized in that** the at least one fastening means (28) is arranged on a side of the base element (14) that is remote from the leaves (12).

6. Leaf seal (10) according to either claim 4 or claim 5, **characterized in that** the at least one fastening means (28) is produced by means of the additive manufacturing method so as to be integral with the base element (14).

7. Leaf seal (10) according to any of claims 1 to 6, **characterized in that** at least one leaf (12) has a winglet (30) at its upstream and/or downstream end region.

8. Leaf seal (10) according to any of claims 1 to 7, **characterized in that** the base element (14) and/or at least one leaf (12) comprises at least one recess.

9. Leaf seal (10) according to any of claims 1 to 8, **characterized in that** the base element (14) is elastically deformable and/or is in the form of a ring segment in a longitudinal section.

10. Gas turbine, in particular an aircraft engine, comprising a housing in which at least one leaf seal (10) according to any of claims 1 to 9 is arranged around a rotor in order to reduce a fluid flow from a high-pressure side to a low-pressure side of the rotor.

11. Gas turbine according to claim 10, **characterized in that** at least two leaf seals (10) are provided and are preferably arranged so as to be offset one behind the other in the axial direction with respect to an axis of rotation of the rotor.

12. Method for producing a leaf seal (10) for sealing a shaft that rotates about an axis, in particular in a gas turbine, the leaf seal (10) comprising a plurality of leaves (12) arranged at a spacing from one another, **characterized in that** the leaves (12) are produced by means of an additive manufacturing method so as to be integral with a base element (14) that supports the leaves (12), **characterized in that**, during the additive manufacturing method, a support structure (16) is formed on the leaf seal (10) and is then preferably removed.

13. Method according to claim 12, **characterized in that** the support structure is formed on an end region of the leaves that is opposite the base element.

## Revendications

1. Joint à lamelles (10) destiné à assurer l'étanchéité d'un arbre tournant autour d'un axe, en particulier dans une turbine à gaz, comprenant une pluralité de lamelles (12) disposées à distance les unes des autres, les lamelles (12) étant fabriquées d'un seul tenant avec un élément de base (14) portant les lamelles (12) au moyen d'un procédé de fabrication générative, **caractérisé en ce qu'**au moins une lamelle (12) présente une géométrie de section transversale irrégulière, et **en ce que** l'au moins une lamelle (12) présente une épaisseur de section transversale réduite dans la zone de l'élément de base (14).

2. Joint à lamelles (10) selon la revendication 1, **caractérisé en ce qu'**au moins une lamelle (12) comprend un élément d'écartement (24) pour le réglage d'une distance minimale par rapport à une lamelle (12) adjacente.

3. Joint à lamelles (10) selon la revendication 1 ou 2, **caractérisé en ce qu'**au moins une lamelle (12) est disposée selon un angle de pose (a) prédéfini et/ou selon un angle d'incidence prédéfini par rapport à un axe longitudinal de l'élément de base (14).

4. Joint à lamelles (10) selon l'une des revendications 1 à 3, **caractérisé en ce que** l'élément de base (14) comprend au moins un moyen de fixation (28) pour la fixation du joint à lamelles (10) à un composant, en particulier à une partie de carter.

5. Joint à lamelles (10) selon la revendication 4, **caractérisé en ce que** l'au moins un moyen de fixation (28) est disposé sur un côté de l'élément de base (14) opposé aux lamelles (12).

6. Joint à lamelles (10) selon la revendication 4 ou 5, **caractérisé en ce que** l'au moins un moyen de fixation (28) est fabriqué d'un seul tenant avec l'élément de base (14) au moyen du procédé de fabrication générative.

7. Joint à lamelles (10) selon l'une des revendications 1 à 6, **caractérisé en ce qu'**au moins une lamelle (12) comporte une ailette (30) dans sa zone d'extrémité amont et/ou aval.

8. Joint à lamelles (10) selon l'une des revendications 1 à 7, **caractérisé en ce que** l'élément de base (14) et/ou au moins une lamelle (12) comporte au moins un évidement.

9. Joint à lamelles (10) selon l'une des revendications 1 à 8, **caractérisé en ce que** l'élément de base (14) est élastiquement déformable et/ou est réalisé sous la forme d'un segment annulaire en section longitudinale.

10. Turbine à gaz, en particulier moteur d'aéronef, comprenant un carter dans lequel au moins un joint à lamelles (10) selon l'une des revendications 1 à 9 est disposé autour d'un rotor afin de réduire un écoulement de fluide d'un côté haute pression à un côté basse pression du rotor.

11. Turbine à gaz selon la revendication 10, **caractérisée en ce qu'**au moins deux joints à lamelles (10) sont prévus, lesquels joints à lamelles sont disposés en série, de préférence décalés dans la direction axiale par rapport à un axe de rotation du rotor.

12. Procédé de fabrication d'un joint à lamelles (10) destiné à assurer l'étanchéité d'un arbre tournant autour d'un axe, en particulier dans une turbine à gaz, le joint à lamelles (10) comprenant une pluralité de lamelles (12) disposées à distance les unes des autres, **caractérisé en ce que** les lamelles (12) sont fabriquées d'un seul tenant avec un élément de base (14) portant les lamelles (12) au moyen d'un procédé de fabrication générative, **caractérisé en ce que**, pendant le procédé de fabrication générative, une structure de support (16) est réalisée au niveau du joint à lamelles (10) et de préférence est ensuite enlevée.

13. Procédé selon la revendication 12, **caractérisé en ce que** la structure de support est réalisée en même temps dans une zone d'extrémité des lamelles opposée à l'élément de base.
